# EUROPEAN PATENT SPECIFICATION

(11) **EP 1 069 070 B1**
(45) Date of publication and mention of the grant of the patent: **30.11.2011**
(21) Application number: 00113766.0
(22) Date of filing: 29.06.2000
(51) Int. Cl.: C01B 3/38

(54) **Process for the catalytic steam reforming of a hydrocarbon feedstock**
Verfahren zur katalytischen Dampfreformierung eines Kohlenwasserstoffeinsatzes
Procédé de reformage à la vapeur catalytique d'une charge d'hydrocarbures

(30) Priority: 15.07.1999 US 143953 P
(43) Date of publication of application: 17.01.2001
(73) Proprietor: Haldor Topsoe A/S, 2800 Kgs. Lyngby (DK)
(72) Inventor: Rostrup-Nielsen, Thomas, 1267 Copenhagen (DK)

(56) References cited:
- EP-A- 0 855 366
- EP-A- 0 921 585
- WO-A-00/05168
- CLARK D N ET AL: "OPPORTUNTIES FOR SAVINGS WITH PREREFORMERS" AMMONIA PLANT SAFETY AND RELATED FACILITIES, NEW YORK, NY, US, vol. 28, 1988, pages 99-106, XP000980296
- DYBKJAER I: "TUBULAR REFORMING AND AUTOTHERMAL REFORMING OF NATURAL GAS - AN OVERVIEW OF AVAILABLE PROCESSES" FUEL PROCESSING TECHNOLOGY, XX, XX, vol. 42, no. 2/3, 1995, pages 85-107, XP000913981 ISSN: 0378-3820

## Description

The present invention relates to a process for the catalyric steam reforming of a hydrocarbon feedstock. In particular, the invention provides an improved process of the above type including the steps of pre-reforming a hydrocarbon steam mixture in contact with catalysed hardware having activity in steam reforming and being arranged on wall of an externally heated pre-reformer, and, subsequently, contacting pre-reformed effluent from the pre-reformer with a steam reforming catalyst arranged catalysed hardware monolith in a fired steam reformer.

Pre-reforming of a hydrocarbon feedstock in the preparation of synthesis gas is well known in the art. Pre-reforming is generally employed with hydrocarbon feed containing higher hydrocarbons or for increasing the capacity of existing reformer plants. Process gas of the hydrocarbon feedstock and steam is thereby introduced in a pre-reformer at temperatures of about 450°C to 550°C. By the steam reforming reactions proceeding in the pre-reformer, the temperature in the process gas usually decreases when carrying out the pre-reforming process in adiabatic manner.

In industrial synthesis gas preparation plants the pre-reformed process gas is subsequently reheated to the required inlet temperature to the fired steam reformer by heat exchange with hot flue gas from the fired reformer. The usual inlet temperature into an industrial reformer is between 600°C and 700°C.

In Ammonia Plant Safety and Related Facilities, NY, US (1988), 28, 99-106, a typical pre-reformer application process in an ammonia plant is disclosed. A gaseous feed is preheated before entering a primary reformer. Prior to entry into the primary reformer, the gaseous feed is fed to a pre-reformer resulting in a temperature reduction of the pre-reformer effluent. The pre-reformer effluent can then be reheated before being fed into the primary reformer. The use of a pre-reformer with reheat can be used to increase plant throughout in situations where rate is restricted by convection section coil skin temperature limitations. Deactivation of the pre-reformer catalyst is not addressed here.

Improved utilisation of heat in the hot flue gas from the fired steam reformer is disclosed in EP Patent Publication No. 855,366. In the process of the latter patent publication process gas to the steam reformer is partly reformed in a pre-heater coil provided with a thin film of steam reforming catalyst on wall of the coil. A high amount of valuable heat in the flue gas is then transferred to and absorbed by the process gas through endothermic steam reforming reactions proceeding on the wall-coated catalyst. The coil dimension and amount of catalyst is thereby adjusted to increase the exit temperature in partially reformed process gas from the catalysed pre-heater coil to the required temperature at inlet to the fired steam reformer.

The main disadvantage of the latter process is decreasing catalyst activity at long time operation of the catalysed pre-heater coil resulting in a coil exit temperature above the maximum allowable gas temperature at inlet of the fired steam reformer due to decreased heat absorption at diminished steam reforming in the gas. The catalyst has then to be reactivated or replaced with fresh catalyst on the coil wall. Replacement of catalyst in the pre-heater coil is a difficult and expensive operation when demounting of the coil from the flue gas channel.

The general object of this invention is to improve long term operability of a steam reforming process of the above type by compensating a decreasing catalyst activity in the pre-heater coil by means of an additional catalyst unit being easy to replace.

In accordance with the above object, this invention provides a process for the catalytic steam reforming of a hydrocarbon feedstock including the steps of pre-reforming a hydrocarbon steam mixture in contact with a first steam reforming catalyst being arranged in an externally heated pre-reformer in a flue gas channel from a fired steam reformer, and contacting pre-reformed effluent from the prereformer with a second steam reforming catalyst in a fired steam reformer, the process including the further step of contacting the pre-reformed effluent with an intermediate catalytic reforming unit being arranged outside the flue gas channel and between the outlet of the prereformer in the flue gas channel and inlet of the fired steam reformer.

By the inventive process loss of activity in the prereformer unit during long time operation will be compensated by steam reforming reactions in pre-reformed effluent within an intermediate reforming unit being arranged between outlet of the pre-reformer in the flue gas channel and inlet of the fired steam reformer. The intermediate unit will then be operated at substantially adiabatic conditions and compensate decreasing steam reforming activity of the steam reforming catalyst or catalysed hardware in the heated pre-reformer and the resulting temperature increase in the effluent from the pre-reformer.

Beside of providing the required temperature adjustment of the process gas below the maximum inlet temperature into the fired steam reformer at long term operation, a further advantage of the intermediate reformer unit is the siting of the unit outside the flue gas channel. To compensate decreasing activity in the pre-reformer as described above, it will be necessary to replace or reactivate spent catalyst upstream the fired steam reformer. As mentioned herein before replacement of spent catalyst in a unit within the flue gas channel is time consuming and expensive to handle.

By arranging an intermediate catalyst unit outside the flue gas channel according to the invention, spent catalyst is then replaced in the intermediate reformer unit and the replacement operation simplified considerably.

The intermediate catalyst unit is thereby preferably mounted in a pipe connecting the pre-reformer with the fired steam reformer outside the flue gas channel. The catalyst in the intermediate unit may be of any shape conveniently employed in steam reforming of hydrocarbons. To reduce pressure drop in the unit, the catalyst is preferably shaped as straight channel monolith.

Size and activity of the catalyst in the intermediate catalyst unit depend on the actual process layout.

## Claims

1. Process for the catalytic steam reforming of a hydrocarbon feedstock including the steps of pre-reforming a hydrocarbon steam mixture in contact with a first steam reforming catalyst being arranged in an externally heated pre-reformer in a flue gas channel from a fired steam reformer, and contacting pre-reformed effluent from the prereformer with a second steam reforming catalyst in a fired steam reformer, the process including the further step of contacting the pre-reformed effluent with an intermediate catalytic reforming unit being arranged outside the flue gas channel and between the outlet of the prereformer in the flue gas channel and inlet of the fired steam reformer.

2. Process of claim 1, wherein the first steam reforming catalyst is a thin film catalyst arranged on wall of the externally heated pre-reformer.

3. Process of claim 1, wherein the intermediate reforming catalytic unit contains a monolithic structured catalyst.

## Patentansprüche

1. Verfahren zur katalytischen Dampfreformierung eines Kohlenwasserstoffeinsatzes umfassend die Schritte Vor-Reformieren eines Kohlenwaseerstoff-DampfGemisches in Kontakt mit einem ersten Dampfreformierungskatalysator, der in einem von außen beheizten Vor-Reformer in einem Abgaskanal eines beheizten Dampfreformers angeordnet ist und Kontaktieren des vor-reformierten Abstroms aus dem Vor-Reformer mit einem zweiten Dampfreformierungskatalysator in einem beheizten Dampfreformer, wobei das Verfahren den weiteren Schritt des Kontaktierens des vor-reformierten Abstroms mit einer zwischengeschalteten katalytischen Reformierungseinheit, die außerhalb des Abgaskanals und zwischen dem Auslass des Vor-Reformers in den Abgaskanal und dem Einlass in den beheizten Dampf-Refomer angeordnet ist.

2. Verfahren nach Anspruch 1, wobei der erste Dampfreformierungskatalysator ein Dünnschicht-Katalysator ist, der an der Wand des von außen beheizten Vor-Reformers angeordnet ist.

3. Verfahren nach Anspruch 1, wobei die zwischengeschaltete katalytische Reformierungseinheit einen monolithisch strukturierten Katalysator enthält.

## Revendications

1. Procédé de reformage catalytique à la vapeur d'une charge d'hydrocarbure incluant les étapes de pré-reformage d'un mélange hydrocarbure-vapeur en contact avec un premier catalyseur de reformage à la vapeur étant agencé dans un pré-reformeur chauffé de l'extérieur dans un canal de gaz de combustion provenant d'un reformeur à la vapeur chauffé, et de mise en contact de l'effluent pré-reformé provenant du pré-reformeur avec un deuxième catalyseur de reformage à la vapeur dans un reformeur à la vapeur chauffé, le procédé incluant l'étape supplémentaire de mise en contact de l'effluent pré-reformé avec une unité de reformage catalytique intermédiaire étant agencée à l'extérieur du canal de gaz de combustion et entre la sortie du pré-reformeur dans le canal de gaz de combustion et l'entrée du reformeur à la vapeur chauffé.

2. Procédé selon la revendication 1, dans lequel le premier catalyseur de reformage à la vapeur est un catalyseur en film mince agencé sur une paroi du pré-reformeur chauffé de l'extérieur.

3. Procédé selon la revendication 1, dans lequel l'unité de reformage catalytique intermédiaire contient un catalyseur à structure monolithique.
